# EUROPÄISCHE PATENTSCHRIFT

(11) **EP 2 607 113 B1**
(45) Veröffentlichungstag und Bekanntmachung des Hinweises auf die Patenterteilung: **20.04.2016**
(21) Anmeldenummer: 12008521.2
(22) Anmeldetag: 21.12.2012
(51) Int. Cl.: B60D 1/48

(54) **Hohlträger für ein Anhängesystem eines Kraftfahrzeugs**
Hollow section for a coupling system for a motor vehicle
Poutre creuse pour un système de remorque d'un véhicule automobile

(30) Priorität: 24.12.2011 DE 102011122466
(43) Veröffentlichungstag der Anmeldung: 26.06.2013
(73) Patentinhaber: WESTFALIA - Automotive GmbH, 33378 Rheda-Wiedenbrück (DE)
(72) Erfinder: Burdick, Sascha, D-34414 Warburg (DE); Waldemar, Dinius, D-33098 Paderborn (DE); Weltz, Jörn-René, D-33758 Schloss Holte-Stukenbrock (DE); Nowosselzew, Eugen, D-33098 Paderborn (DE)
(74) Vertreter: Patentanwälte Bregenzer und Reule Partnerschaftsgesellschaft mbB

(56) Entgegenhaltungen:
- DE-A1- 10 107 080
- DE-A1-102007 002 665
- US-A- 4 032 170
- US-A- 6 079 728
- US-B1- 7 607 677

## Beschreibung

Die Erfindung bezieht sich auf einen Hohlträger für ein Anhängesystem eines Kraftfahrzeugs, vorzugsweise eines Personenkraftwagens, nach dem Oberbegriff des Patentanspruchs 1.

Ein derartiger Hohlträger geht z.B. aus US 7 607 677 B1 hervor.

Die Erfindung betrifft einen Hohlträger für ein Anhängesystem eines Kraftfahrzeugs, vorzugsweise eines Personenkraftwagens, welcher Hohlträger als Rohrkörper ausgebildet ist und einen Querträgerabschnitt mit seitlichen Längsträgerabschnitten umfasst, die aus einem Stück hergestellt sind, wobei der Hohlträger einerseits über die Längsträgerabschnitte an Aufbaubereichen eines Aufbaus des Personenkraftwagens befestigt oder befestigbar ist und andererseits ein Verbindungssystem für eine Tragvorrichtung, einen Anhänger oder dgl. aufweist.

Es ist eine Anhängeeinrichtung für ein Fahrzeug bekannt,
US 6,464,240, die an ein Rahmensystem eines Fahrzeugs anbaubar ist. Die Anhängeinrichtung umfasst einen in Fahrzeugquerrichtung verlaufenden Mittelteil, von dem aus seitliche in Fahrzeuglängsrichtung ausgerichtete Längsträger weggeführt sind. Zwischen Mittelteil und Längsträger erstrecken sich Bögen, wobei das Mittelteil, die Bögen sowie die Längsträger durch Extrudieren aus einem Stück hergestellt sind und einen Anhängeeinrichtungsträger bilden, der aus einer Leichtmetalllegierung besteht. Der Querschnitt des Mittelteils besitzt die Form eines Rohres, und er weist eine kreisförmige Gestalt auf. Die Längsträger sind in der Weise verformt, dass sich abgeflachte Konsolen ergeben. In die Konsolen sind Bohrungen eingearbeitet, die von zur Befestigung des Anhängeträgers dienenden Schrauben durchdrungen werden.

Aus der US 2005/0179232 A1 geht ein Anhängekupplungssystem für ein Fahrzeug hervor, das einen aus einem Stück hergestellten Rahmenkörper aufweist. Ein in Fahrzeugquerrichtung ausgerichteter Mittelabschnitt des Rahmenkörpers erstreckt sich bis zu seitlichen Bögen hin, die in Längsträgerabschnitte, ausgerichtet in Fahrzeuglängsrichtung, übergehen. Der Mittelabschnitt umfasst einen rechteckigen Querschnitt, wobei in einer Mittellängsebene des Rahmenkörpers bzw. des Fahrzeugs ein Aufnahmesystem für einen Kupplungshals vorgesehen ist. Die Längsträgerabschnitte weisen jeweils einen winkelförmigen Querschnitt mit einem waagrechten Abschnitt und einem aufrechten Abschnitt auf. Über die waagrechten Abschnitte wird der Rahmenkörper unter Vermittlung von Schrauben am Fahrzeug befestigt.

Es ist Aufgabe der Erfindung einen Hohlträger für ein Anhängesystem eines Kraftfahrzeugs, vorzugsweise eines Personenkraftwagens so auszulegen, dass der Hohlträger bei geringem Gewicht die auftretenden auf das Anhängesystem einwirkenden Belastungen gut aufnimmt und relativ niedrige Herstellungskosten verursacht.

Diese Aufgabe wird nach der Erfindung durch die Merkmale des Patentanspruchs 1 gelöst. Weitere, die Erfindung ausgestaltende Merkmale sind in den Unteransprüchen enthalten.

Erfindungsgemäß ist vorgesehen, dass der Hohlträger durch ein Strangpressprofil gebildet ist, das entlang der Längsträgerabschnitte und dem Querträgerabschnitt einen im Wesentlichen konstanten Querschnitt besitzt, wobei der Querschnitt als vieleckiges Profil dargestellt ist.

Die mit der Erfindung hauptsächlich erzielten Vorteile sind darin zu sehen, dass der aus Stahl, Leichtmetall oder dgl. bestehende Hohlträger als ein leicht herstellbares Strangpressprofil ausgebildet ist, das bei definierter Gestaltung den auf das Anhängesystem einwirkenden Kräften musterhaft standhält.

An dem Querträgerabschnitt lässt sich auf einfache Weise ein Verbindungssystem befestigen, das zur Koppelung mit einer Tragvorrichtung z.B. für Fahrräder oder einem Anhänger ausgebildet ist. Und die Längsträgerabschnitte sind so ausgeführt, dass sie aufwandsarm mit Aufbaubereichen des Aufbaus des Kraftfahrzeugs oder Personenkraftwagens verbindbar sind. Vorzugsweise sind beispielsweise an den Längsträgern Befestigungsmittel, zum Beispiel Schraub-Bohrungen, Schraubvorsprünge, Steckvorsprünge oder Steckaufnahmen oder dergleichen vorgesehen, um den Hohlträger bzw. ein den Hohlträger umfassendes Trägersystem am Kraftfahrzeug zu befestigen.

Festigkeitsmäßig günstig ist es, wenn der Hohlträger einen rechteckigen Querschnitt besitzt, dessen längere Wände aufrecht stehen.

Zwischen dem Querträgerabschnitt und den Längsträgerabschnitten oder dem Querträgerabschnitt und einem jeweiligen Längsträgerabschnitt können eine oder mehrere Zwischenträgerabschnitte vorgesehen sein.

Bevorzugt ist eine Ausführungsform mit nur einem einzigen Zwischenträgerabschnitt zwischen dem Querträgerabschnitt und einem jeweiligen Längsträgerabschnitt, was in der Zeichnung näher dargestellt ist.

Es ist aber auch möglich, dass mehrere Zwischenträgerabschnitte zwischen einem jeweiligen Längsträgerabschnitt und dem Querträgerabschnitt vorgesehen sind. Somit können beispielsweise über mehrere Winkelsegmente jeweils Zwischenträgerabschnitte vorgesehen sein.

Vorteilhaft ist es, wenn ein Winkel zwischen dem Querträgerabschnitt und einem Zwischenträgerabschnitt und/oder ein Winkel zwischen zwei aneinander angrenzenden Zwischenträgerabschnitten und/oder ein Winkel zwischen einem Zwischenträgerabschnitt und einem Längsträgerabschnitte ein stumpfer Winkel ist. Stumpfe Winkel tragen zur Festigkeit bei.

Ein Übergangsabschnitt zwischen einem Längsträgerabschnitt und einem Zwischenträgerabschnitt und/oder einem Zwischenträgerabschnitt und dem Querträgerabschnitt oder auch zwischen zwei benachbarten Zwischenträgerabschnitten ist vorzugsweise gekrümmt oder bogenförmig. Mithin können also kurze, gekrümmte Abschnitte des Hohlträgers zwischen zwei benachbarten, zueinander winkeligen Abschnitten des Hohlträgers vorgesehen sein.

Vorteilhaft ist es, wenn Zwischenträgerabschnitte einen solchen Verlauf aufweisen, dass sie zusammen mit den Längsträgerabschnitten und dem Querträgerabschnitt stumpfe Winkel einschließen.

Der Querträgerabschnitt, die Zwischenträgerabschnitte und die Längsträgerabschnitte liegen jeweils auf einer Geraden, was zur Fertigungsvereinfachung beiträgt.

Der Querträgerabschnitt und/oder ein jeweiliger Längsträgerabschnitt und/oder optional ein dazwischenliegender Zwischenträgerabschnitt hat zweckmäßigerweise einen geradlinigen Verlauf.

Es ist auch möglich, dass beispielsweise einer oder mehrere Abschnitte des Hohlträgers einen bogenförmigen Verlauf haben, beispielsweise die vorgenannten Zwischenträgerabschnitte, von denen sich mindestens einer zwischen einem jeweiligen Längsträgerabschnitt und dem Querträgerabschnitt erstreckt.

Schließlich leisten die Stützwände zwischen den kürzeren und längeren Wänden des rechteckigen Profils einen Beitrag zur Festigkeitsoptimierung des Hohlträgers.

Die Formulierungen "aufrecht stehen" oder "waagerecht liegen" sollen vorzugsweise so verstanden werden, dass sie den montierten Zustand des Grundträgers definieren, also beispielsweise einen im montierten Zustand im Wesentlichen vertikalen Verlauf oder im wesentlichen horizontalen Verlauf definieren.

Der Grundträger bildet also zweckmäßigerweise einen Bestandteil eines Trägersystems, das zum Anbau an eine Karosserie eines Kraftfahrzeugs vorgesehen ist. Die Tragvorrichtung kann einen integralen Bestandteil des Trägerssystems bilden. Beispielsweise umfasst die Tragvorrichtung einen Kupplungsarm, der lösbar, dauerhaft oder beweglich am Hohlträger, insbesondere dessen Querträgerabschnitt, befestigt ist.

An dem Querträger kann beispielsweise eine Aufnahmehülse oder ein Aufnahmerohr für einen Kupplungsarm oder einem Trägerarm eines Lastenträgers vorgesehen sein.

Der Kupplungsarm kann beispielsweise mittels eines Lagers zwischen einer Gebrauchsstellung, in der er nach hinten vor das Heck des Kraftfahrzeugs vorsteht und zum Anhängen eines Anhängers geeignet ist, und einer Nichtgebrauchsstellung verstellbar sein, in der er näher zum Heck des Kraftfahrzeugs hin verstellt ist, beispielsweise unter einen Stoßfänger oder hinter einen Stoßfänger des Kraftfahrzeugs zurück verstellt ist. Das Lager kann ein Schwenklager, ein Schiebe-lager oder beides umfassen (Schwenk-Schiebe-Lager).

Der Hohlträger zeichnet sich also vorzugsweise dadurch aus, dass der Querträgerabschnitt und die Längsträgerabschnitte aus einem Stück gebildet sind.

In der Zeichnung wird ein Ausführungsbeispiel der Erfindung gezeigt, das nachstehend näher erläutert wird.

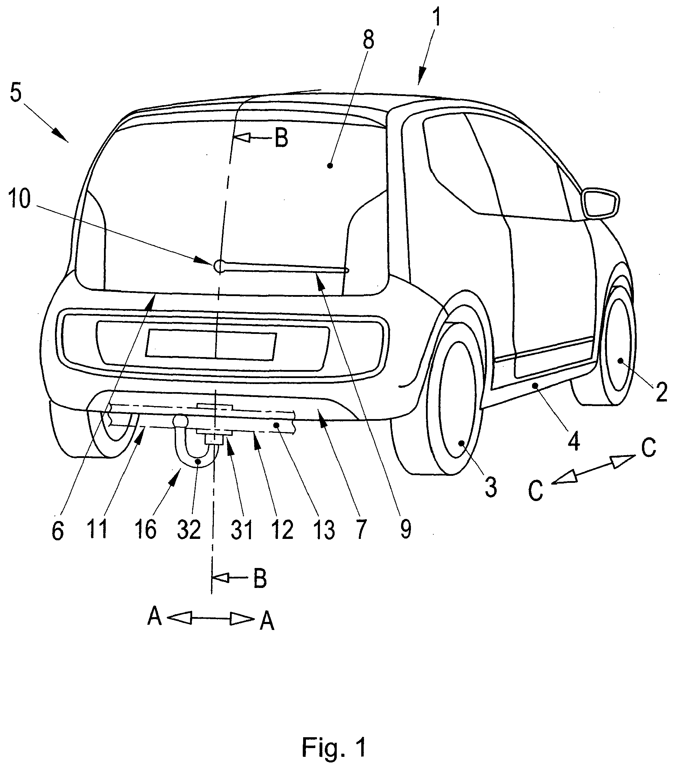

Es zeigen
- Fig. 1: eine Schrägansicht von hinten rechts auf einen Personenkraftwagen mit einem einen Hohlträger umfassenden Anhängesystem,

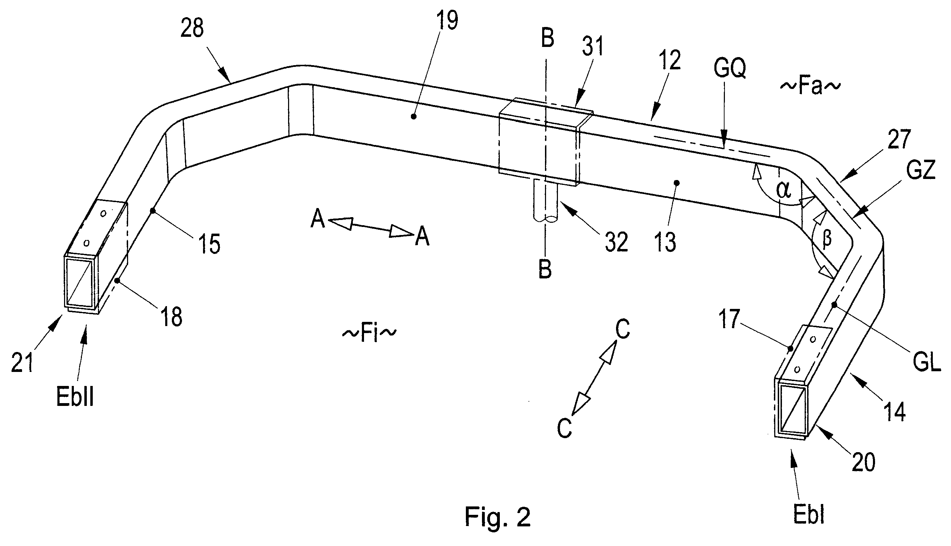

- Fig. 2: eine Schrägansicht auf den Hohlträger, und zwar entgegen der Fahrtrichtung betrachtet,
- Fig. 3: eine Schrägansicht auf einen vorderen Endbereich eines Längsträgers des Hohlträgers gemäß Fig. 2.

Von einem Kraftfahrzeug, z.B. einem Personenkraftwagen 1, dargestellt ist ein von Rädern 2 und 3 getragener Aufbau 4, der in einem Heck 5 eine mit einer unteren in Fahrzeugquerrichtung A-A verlaufenden Begrenzungskante 6 nahe an einen Stoßfänger 7 herangeführte Glasscheibe 8 umfasst. Die Glasscheibe 8 erstreckt sich über eine wesentliche Breite des Personenkraftwagens 1 und ist mit einem Scheibenwischerarm 9 versehen, dessen Schwenkachse 10 auf einer Mittellängsebene B-B des besagten Personenkraftwagens liegt.

Benachbart der Unterkante des Stoßfängers 7 ist ein Anhängesystem 11 vorgesehen, das einen als in Fahrzugquerrichtung A-A verlaufenden Hohlträger 12 aufweist, und zwar dargestellt als ein aus Stahl, Metall oder dgl. hergestelltes Strangpressprofil. Der Hohlträger 12 besteht aus einem Querträgerabschnitt 13 und seitlichen in Fahrzuglängsrichtung C-C ausgerichteten von Endbereichen Ebl und Ebll begrenzten Längsträgerabschnitten 14 und 15, wobei der Querträgerabschnitt und die Längsträgerabschnitte 14 und 15 aus einem Stück bestehen. In der Mittelängsebene B-B ist am Querträgerabschnitt 13 ein Verbindungssystem 16 angebracht, das mit einer Tragvorrichtung z.B. für Fahrräder oder einem Anhänger -letztere sind nicht abgebildetkoppelbar ist. Die Längsträger abschnitte 14 und 15 sind unter Vermittlung von Halteeinrichtungen 17 und 18 mit nicht näher dargestellten Aufbaubereichen des Aufbaus 4 verbunden.

Der Hohlträger 12 wird durch einen Rohrkörper 19 gebildet, der entlang der Längsträgerabschnitte 14 und 15 und dem Querträgerabschnitt 13 einen konstanten Querschnitt 20 aufweist, welcher Querschnitt 20 als vieleckiges Profil 21 ausgeführt ist. Das vieleckige Profil 21 besitzt eine rechteckige Form, und zwar mit längeren Wänden 22, 23 und kürzeren Wänden 24, 25. Dabei stehen die längeren der Fahrzeuginnenseite Fi zugekehrte innere Wand 22 und die zur Fahrzeugaußenseite Fa hin gerichtete Wand 23 aufrecht. Die kürzeren unteren und oberen Wände 24 und 25 sind horizontal ausgerichtet.

Zwischen dem Querträgerabschnitt 13 und den Längsträgerabschnitten z.B. erstrecken sich Zwischenträgerabschnitte 27 und 28. Die Zwischenträgerabschnitte 27 und 28 weisen einen solchen Verlauf auf, dass sie zusammen mit den Längsträgerabschnitten 14 und 15 stumpfe Winkel α und β einschließen. Dabei liegen der Querträgerabschnitt 13, die Zwischenträgerabschnitte 27 und 28 und die Längsträgerabschnitte 14 und 15 jeweils auf einer Geraden GQ, GZ, GL.

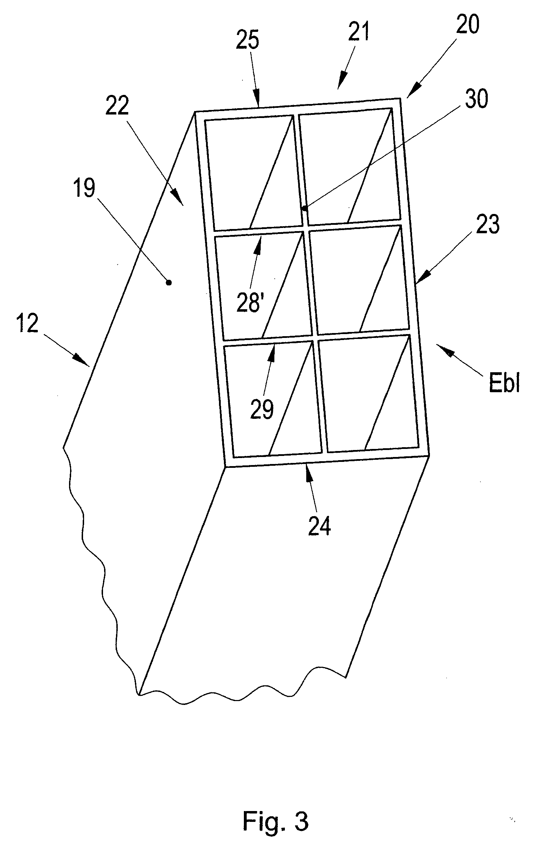

Die Fig. 3 gibt wieder, dass zwischen den längeren Wänden 22, 23 und den kürzeren Wänden 24, 25 des Querschnitts 20 bzw. Profils 21 waagrechte und senkrechte Stützwände 28' und 29 bzw. 30. vorgesehen sind. Im Ausführungsbeispiel ist zwischen den kürzeren Wände 24 und 25 lediglich die Stützwand 30 vorgesehen, wogegen zwischen den längeren Wänden 22 und 23 zwei Stützwände, nämlich 28' und 29 wirksam sind.

Das Verbindungssystem 16, das ja zwischen Tragvorrichtung bzw. einem Anhänger angeordnet ist, weist eine den Querträgerabschnitt 13 zumindest teilweise umschließende Aufnahme 31 auf, die mittels Schrauben oder durch Kleben, Schweißen oder dgl. am Querträgerabschnitt 13 in Lage gehalten wird. An der Aufnahme 31 angebracht ist ein Kugelhals 32 der schwenkbar oder lösbar mit dem Anhängsystem 11 verbunden ist.

## Patentansprüche

1. Hohlträger für ein Anhängesystem eines Kraftfahrzeugs, vorzugsweise eines Personenkraftwagens, welcher Hohlträger als Rohrkörper ausgebildet ist und einen Querträgerabschnitt mit seitlichen Längsträgerabschnitten umfasst, die aus einem Stück hergestellt sind, wobei der Hohlträger einerseits über die Längsträgerabschnitte an Aufbaubereichen eines Aufbaus des Kraftfahrzeugs befestigt oder befestigbar ist und andererseits ein Verbindungssystem für eine Tragvorrichtung oder einen Anhänger aufweist, wobei der Hohlträger (12) durch ein Strangpressprofil gebildet wird, das entlang der Längsträgerabschnitte (14 und 15) und dem Querträgerabschnitt (13) einen im Wesentlichen konstanten Querschnitt (20) besitzt, wobei der Querschnitt (20) als vieleckiges Profil (21) dargestellt ist, **dadurch gekennzeichnet, dass** zwischen längeren Wänden (22; 23) und kürzeren Wänden (24; 25) des Querschnitts (20) Stützwände (28', 29 und 30) vorgesehen sind.

2. Hohlträger nach Anspruch 1, **dadurch gekennzeichnet, dass** das vieleckige Profil (21) eine rechteckige Form mit längeren Wänden (22; 23) und kürzeren Wänden (24; 25) umfasst, wobei die längeren inneren und äußeren Wände (22; 23) aufrecht stehen und die unteren und oberen Wände (24; 25) horizontal ausgerichtet sind.

3. Hohlträger nach Anspruch 1 oder 2, **dadurch gekennzeichnet, dass** sich zwischen dem Querträgerabschnitt (13) und den Längsträgerabschnitten (14 und 15) Zwischenträgerabschnitte (27 und 28) erstrecken.

4. Hohlträger nach Anspruch 3, **dadurch gekennzeichnet, dass** zwischen dem Querträgerabschnitt (13) und einem jeweiligen Längsträgerabschnitt (14, 15) ein einziger Zwischenträgerabschnitt (27 und 28) vorgesehen ist.

5. Hohlträger nach Anspruch 3 oder 4, **dadurch gekennzeichnet, dass** die Zwischenträgerabschnitte (27 und 28) einen solchen Verlauf aufweisen, dass sie zusammen mit den Längsträgerabschnitten (14 und 15) und dem Querträgerabschnitt (13) stumpfe Winkel (α und β) einschließen.

6. Hohlträger nach Anspruch 3, 4 oder 5, **dadurch gekennzeichnet, dass** ein Zwischenträgerabschnitt einen gekrümmten oder bogenförmigen Verlauf hat.

7. Hohlträger nach einem der Ansprüche 3 bis 6, **dadurch gekennzeichnet, dass** zwischen einem Zwischenträgerabschnitt (27, 28) und dem Querträgerabschnitt (13) und/oder zwischen einem Zwischenträgerabschnitt (27, 28) einem Längsträgerabschnitt (14, 15) und/oder zwischen aneinander angrenzenden Zwischenträgerabschnitten (27, 28) ein gekrümmter Abschnitt vorgesehen ist.

8. Hohlträger nach einem der vorhergehenden Ansprüche, **dadurch gekennzeichnet, dass** der Querträgerabschnitt (13) und/oder die Zwischenträgerabschnitte (27 und 28) und/oder die Längsträgerabschnitte (15 und 15) auf einer Geraden (GQ, GZ und GL) liegen und/oder einen geradlinigen Verlauf haben..

9. Hohlträger nach einem der vorhergehenden Ansprüche, **dadurch gekennzeichnet, dass** zwischen den kürzeren Wänden (24; 25) wenigstens eine Stützwand (30) vorgesehen ist.

10. Hohlträger nach einem der vorhergehenden Ansprüche, **dadurch gekennzeichnet, dass** zwischen den längeren Wänden (22; 23) wenigsten zwei Stützwände (28' und 29) angeordnet sind.

11. Hohlträger nach einem der vorhergehenden Ansprüche, **dadurch gekennzeichnet dass** er Befestigungsmittel zur Befestigung an dem Kraftfahrzeug, insbesondere Personenkraftwagen, aufweist, insbesondere Schraubmittel und/oder Steckmittel.

12. Trägersystem umfassend einen Hohlträger nach einem der vorhergehenden Ansprüche, wobei das Trägersystem einen Kupplungsarm zum Anhängen eines Anhängers und/oder eine Halterung zum Halten eines Heck-Lastenträgers umfasst.

## Claims

1. Hollow member for a trailer system of a motor vehicle, preferably a car, with said hollow member forming a tubular body and including a cross-member section with side longitudinal member sections, which are made from one piece, wherein the hollow member is or may be fastened at one end via the longitudinal member sections to body sections of a body of the motor vehicle and at the other end has a connecting system for a carrying fixture or a trailer, wherein the hollow member (12) is formed by an extruded profile which has a substantially constant cross-section (20) along the longitudinal member sections (14 and 15) and the cross-member section (13), wherein the cross-section (20) is shown as a polygonal profile (21), **characterised in that** support walls (28', 29 and 30) are provided between longer walls (22; 23) and shorter walls (24; 25) of the cross-section (20).

2. Hollow member according to claim 1, **characterised in that** the polygonal profile (21) comprises a rectangular form with longer walls (22; 23) and shorter walls (24; 25), wherein the longer inner and outer walls (22; 23) stand upright and the upper and lower walls (24; 25) are aligned horizontally.

3. Hollow member according to claim 1 or 2, **characterised in that** intermediate member sections (27 and 28) extend between the cross-member section (13) and the longitudinal member sections (14 and 15).

4. Hollow member according to claim 3, **characterised in that** a single intermediate member section (27 and 28) is provided between the cross-member section (13) and each longitudinal member section (14, 15).

5. Hollow member according to claim 3 or 4, **characterised in that** the intermediate member sections (27 and 28) have a course such that, together with the longitudinal member sections (14 and 15) and the cross-member section (13), they enclose obtuse angles (α and β).

6. Hollow member according to claim 3, 4 or 5, **characterised in that** an intermediate member section has a curved or arched shape.

7. Hollow member according to any of claims 3 to 6, **characterised in that** a curved section is provided between an intermediate member section (27, 28) and the cross-member section (13) and/or between an intermediate member section (27, 28) and a longitudinal member section (14, 15) and/or between adjacent intermediate member sections (27, 28).

8. Hollow member according to any of the preceding claims, **characterised in that** the cross-member section (13) and/or the intermediate member sections (27, 28) and/or the longitudinal member sections (15 and 15) lie on a straight line (GQ, GZ and GL) and/or have a straightline course.

9. Hollow member according to any of the preceding claims, **characterised in that** at least one support wall (30) is provided between the shorter walls (24; 25).

10. Hollow member according to any of the preceding claims, **characterised in that** at least two support walls (28' and 29) are provided between the longer walls (22; 23).

11. Hollow member according to any of the preceding claims, **characterised in that** it has fastening means for attaching to the motor vehicle, in particular a car, in particular screw means and/or plug-in means.

12. Carrier system including a hollow member according to any of the preceding claims, wherein the carrier system includes a coupling arm for attaching a trailer and/or a mounting for holding a rear load carrier.

## Revendications

1. Support creux pour un système de remorque d'un véhicule automobile, de préférence un véhicule à moteur de transport de personnes, lequel support creux est réalisée sous la forme d'un corps tubulaire et comprend une section de support transversale pourvue de sections de support longitudinales latérales, qui sont fabriquées à partir d'une seule pièce, sachant que le support creux est fixé ou peut être fixé d'une part, par l'intermédiaire des sections de support longitudinales, au niveau de zones de caisse d'une caisse du véhicule automobile et qu'il présente d'autre part un système d'assemblage pour un dispositif porteur ou une remorque, sachant que le support creux (12) est formé par un profil extrudé, qui possède, le long des sections de support longitudinales (14 et 15) et de la section de support transversale (13), une section (20) essentiellement constante, sachant que la section (20) est représentée sous la forme d'un profil (21) polygonal, **caractérisé en ce que** sont prévues entre les parois plus longues (22 ; 23) et les parois plus courtes (24 ; 25), de la section transversale (20), des parois de soutien (28', 29 et 30).

2. Support creux selon la revendication 1, **caractérisé en ce que** le profil (21) polygonal comprend une forme rectangulaire pourvue de parois plus longues (22 ; 23) et de parois plus courtes (24 ; 25), sachant que les parois plus longues intérieures et extérieures (22 ; 23) sont verticales et que les parois inférieures et supérieures (24 ; 25) sont orientées de manière horizontale.

3. Support creux selon la revendication 1 ou 2, **caractérisé en ce que** des sections de support intermédiaires (27 et 28) s'étendent entre la section de support transversale (13) et les sections de support longitudinales (14 et 15).

4. Support creux selon la revendication 3, **caractérisé en ce qu'**une unique section de support intermédiaire (27 et 28) est prévue entre la section de support transversale (13) et une section de support longitudinale (14, 15) respective.

5. Support creux selon la revendication 3 ou 4, **caractérisé en ce que** les sections de support intermédiaires (27 et 28) présentent une extension telle qu'elles forment, conjointement avec les sections de support longitudinales (14 et 15) et la section de support transversale (13), des angles obtus (α et ß).

6. Support creux selon la revendication 3, 4 ou 5, **caractérisé en ce qu'**une section de support intermédiaire a une extension incurvée ou en forme d'arc.

7. Support creux selon l'une quelconque des revendications 3 à 6, **caractérisé en ce qu'**une section incurvée est prévue entre une section de support intermédiaire (27, 28) et la section de support transversale (13) et/ou entre une section de support intermédiaire (27, 28) et une section de support longitudinale (14, 15) et/ou entre des sections de support intermédiaires (27, 28) adjacentes les unes aux autres.

8. Support creux selon l'une quelconque des revendications précédentes, **caractérisé en ce que** la section de support transversale (13) et/ou les sections de support intermédiaires (27 et 28) et/ou les sections de support longitudinales (15 et 15) se trouvent sur une ligne (GQ, GZ et GL) et/ou ont une extension rectiligne.

9. Support creux selon l'une quelconque des revendications précédentes, **caractérisé en ce qu'**au moins une paroi de support (30) est prévue entre les parois plus courtes (24 ; 25).

10. Support creux selon l'une quelconque des revendications précédentes, **caractérisé en ce qu'**au moins deux parois de support (28' et 29) sont disposées entre les parois plus longues (22 ; 23).

11. Support creux selon l'une quelconque des revendications précédentes, **caractérisé en ce qu'**elle présente des moyens de fixation destinés à être fixés au niveau du véhicule automobile, en particulier du véhicule à moteur de transport de personnes, en particulier des moyens de vissage et/ou des moyens d'emboîtement.

12. Système de support comprenant un support creux selon l'une quelconque des revendications précédentes, sachant que le système de support comprend un bras de couplage servant à remorquer une remorque et/ou une fixation servant à fixer un support de charges arrière.
